# EUROPEAN PATENT SPECIFICATION

(11) **EP 2 640 232 B1**
(45) Date of publication and mention of the grant of the patent: **17.09.2014**
(21) Application number: 11785067.7
(22) Date of filing: 11.11.2011
(51) Int. Cl.: A47J 31/06

(54) **APPARATUS AND METHODS RELATING TO DISPENSATION FROM BEVERAGE MACHINES**
VORRICHTUNG UND VERFAHREN IM ZUSAMMENHANG MIT DER AUSGABE AUS GETRÄNKEAUTOMATEN
APPAREIL ET PROCÉDÉS CONCERNANT LA DISTRIBUTION À PARTIR DE MACHINES À BOISSONS

(30) Priority: 18.11.2010 GB 201019587
(43) Date of publication of application: 25.09.2013
(60) Divisional application: 14172556.4
(73) Proprietor: Kraft Foods R & D, Inc., Deerfield, IL 60015 (US)
(72) Inventor: HANSEN, Nick Andrew, Banbury Oxfordshire OX16 1AH (GB); NORTON, Mark, Banbury Oxfordshire OX16 0ND (GB)
(74) Representative: Boult Wade Tennant
(86) International application number: PCT/GB2011/052208
(87) International publication number: WO 2012/066313

(56) References cited:
- WO-A1-2005/099534
- WO-A1-2010/099806
- US-A1- 2003 005 826
- US-A1- 2005 034 605
- US-A1- 2005 236 323

## Description

The present application relates to apparatus and methods relating to dispensation from beverage machines. In particular, it relates to devices, combinations of devices and beverage machines, and methods allowing for dispensation of heated water and other beverages from beverage machines.

### Background

Machines for dispensing beverages are well known. For example, coffee filter machines have been available for many years which combine hot water with ground coffee beans to produce a coffee extract that is then passed through a paper filter into a carafe. US3987717 describes one such machine. In more recent times 'on-demand' beverage machines have been marketed which allow for beverages to be produced on an individual basis as required by a user. Examples of such machines include those marketed under the brand names NESPRESSO^{®} by Nestlé S.A. and SENSEO^{®} by Sara Lee Corporation which allow individual servings of coffee to be produced from individual sealed capsules or flexible bags of ground coffee.

Still more recently, beverage machines allowing for convenient, on demand dispensation of a range of beverage types have been produced. One example of such a system is marketed under the brand name TASSIMO^{®} by Kraft Foods, Inc. This system (as described in EP1440639) utilises a beverage machine that comprises a barcode reader and a range of beverage cartridges wherein each beverage cartridge contains one or more beverage ingredients and is coded with a barcode. In use, the code reader of the beverage machine scans and reads the barcode on a beverage cartridge after it is inserted into the machine and uses information decoded from the barcode to set one or more dispensation parameters of the beverage machine for that dispensation cycle. For each beverage cartridge the manufacturer determines the dispensation parameters and applies the relevant barcode at the point of manufacture. In addition, each beverage cartridge can only be used once.

A further beverage machine is known from US 2003/005826 A1.

### Brief Summary of the Disclosure

In a first aspect the present disclosure describes a device, suitable for use with a beverage machine of the type comprising a code reader, the device comprising:
an inlet for receiving, in use, heated water from a water supply of the beverage machine; and
an outlet through which said heated water can be dispensed;
the device further comprising a plurality of codes, each of the plurality of codes containing information relating to one or more dispensation parameters of the beverage machine;
the device being configurable by a user such that the user can choose one of the plurality of codes to be read by the code reader of the beverage machine during a dispensation operation in order to set one or more dispensation parameters of the beverage machine.

Advantageously, the device allows a beverage machine with a code reader to be used to dispense heated water whilst allowing a user to control and vary one or more parameters of the dispensed water. The user may configure the device for each dispensation operation if desired so that a single device can be used for dispensing servings of heated water with differing characteristics.

Preferably the device is empty of beverage ingredients prior to use. As such, the device is able to dispense heated water into a variety of receptacles. Dispensing heated water only from the beverage machine (without the addition of any other beverage ingredients) can be desirable where a supply of heated water is required by a user for making beverages outside the beverage machine using items such as conventional tea bags or hot chocolate powder sachets. In addition, heated water dispensed using the present device can be used for reconstituting dehydrated food products such as dehydrated noodles as well as for forming medicinal preparations from powdered sachets of medicinal product such as cold & flu treatments. Indeed, the present device can be used for dispensing heated water for any purpose where conventionally an electric kettle might be utilised, including for example, for cleaning, for sterilisation of items, for filling of items such as hot water bottles, etc.

The plurality of codes may be spatially distributed on the device.

A part of, or the whole of, the device may be disposed in a plurality of dispositions relative to the beverage machine in order to choose the one of the plurality of codes to be read by the code reader. In this way the user is able to select the code to be read by the code reader by the physical position and/or orientation of the device relative to the beverage machine, and in particular to the sensor or scanner of the code reader. The physical positioning of the device may involve moving the entire device relative to the beverage machine or only a part thereof.

The inlet and outlet of the device may be on the same side of the device. The inlet and outlet of the device may be on the lower side of the device in use.

A flow path between the inlet and the outlet of the device may extend through an interior of the device. The flow path may be a conduit linking the inlet and the outlet of the device.

The inlet and/or outlet may be provided with a seal or seals to improve the fluid coupling of the device with the heated water supply and/or the outlet of the beverage machine. The seal or seals may be a rubber or polymer gasket or O-ring.

The device may be provided with two or more codes. Preferably the device may be provided with four of more codes. In one aspect the device is provided with four codes.

The plurality of codes may be distributed linearly on the device or circumferentially about the device.

The one or more dispensation parameters may include one or more of:
- the volume of heated water to be dispensed;
- the temperature of the heated water to be dispensed; and
- the timing of dispensation of the heated water.

The volume parameter may set the volume as 150ml, 200ml, 400ml or 600ml. Other volumes could, of course, be used.

The temperature parameter may set the temperature as 65°C, 80°C, 90°C or 95°C. Other temperatures could, of course, be used.

The timing parameter may set the flow rate of dispensation as, for example, fast or slow and could also, or alternatively, instruct one or more pauses in the dispensation in order to dispense the heated water in two or more portions.

The device may have codes with only one varying parameter. For example, a device with four codes may be used to set the dispensation volume as 150ml, 200ml, 400ml or 600ml. In this case the codes may also instruct the beverage machine as to the dispensation temperature of the water and the flow rate of the water although these parameters would be the same for all four codes.

Similarly, a device with four codes may be used to set the dispensation temperature as 65°C, 80°C, 90°C or 95°C. In this case the codes may also instruct the beverage machine as to the dispensation volume of the water and the flow rate of the water although these parameters would be the same for all four codes.

Alternatively, a single device may have codes with more than one parameter varying. For example, a device with four codes may have the following parameters:

| | Temperature (°C) | Volume (ml) | Flow rate |
|---|---|---|---|
| Code 1 | 95 | 400 | Fast |
| Code 2 | 90 | 600 | Fast |
| Code 3 | 65 | 200 | Fast |
| Code 4 | 95 | 150 | Slow |

Other permutations could, of course, be used.

The plurality of codes may also contain data not directly related to dispensation parameters, for example quality control data, best before data, component tracking data, etc.

The plurality of codes may be a plurality of barcodes or other optically machine-readable representations of data. Another example of an optically-read code is a QR code. Alternative coding systems may be used if desired, including systems such Radio-frequency Identification (RFID) tags etc.

As noted above, the barcodes may contain data for a single dispensation parameter or may contain data for multiple dispensation parameters.

The device may comprise indicia relating to the one or more dispensation parameters of each of the plurality of codes. For example, where the parameter set by the device is the volume of heated water to be dispensed the device may be provided with indicia indicating the volume relating to each code. The indicia may be alphanumeric characters, graphic symbols, colours or similar.

The or each of the parts of the device may by formed from a plurality of pieces that are assembled together. Preferably the pieces are formed from mouldings of polypropylene. Other engineering plastics may also be used.

In one aspect the device comprises a first part and a second part; the second part comprising the plurality of codes and being movable relative to the first part to allow the user to configure the device. Advantageously forming the device from at least two parts that are movable relative to one another allows for part of the device to remain in the same position relative to the beverage machine irrespective of which code is selected by the user.

A mechanism for helping to ensure accurate selection of one of the plurality of codes and also to provide tactile feedback to a user relating to the relative positions of the first part and the second part may be provided. For example, one of the first and second parts may be provided with a detent or similar projection and the other of the first and second parts may be provided with a race with a plurality of recesses therein into which the detent or projection can be received as the second part is moved relative to the first part. Each of the recesses in the race corresponds in position with one of the plurality of codes of the second part being in the correct position to be read by the code reader of the beverage machine. Thus, when moving the second part relative to the first part the second part will have a tendency to notch into discrete and intended positions relative to the first part and a user will need to use a slightly increased force to move the second part into an adjacent position.

As noted above, the device may comprise indicia relating to one or more dispensation parameters and these may be provided on the second part. The device may be provided with a pointer or marker indicating which code is selected as the first and second parts are moved relative to one another.

The second part may be rotatable relative to the first part. The plurality of codes may be circumferentially distributed on the second part.

The first part may comprise a window through which the code reader of the beverage machine is enabled to read one of the plurality of codes during the dispensation operation.

The first part may comprise the inlet and the outlet. Where this is the case, preferably the first part is always used in the same position and orientation relative to the beverage machine in order to allow coupling of the device to the heated water supply of the beverage machine. Consequently, the second part is designed to be moved to select the code to be read.

As noted above, the first part may be provided with one or more seals for the inlet and/or outlet to improve fluid coupling with the beverage machine.

Preferably the first part further comprises a passage for conveying heated water from the inlet to the outlet.

The present disclosure also describes the combination of a device as described above in any of its various forms and a beverage machine which comprises a code reader.

The outlet of the device may define a discharge outlet of the beverage machine. Advantageously using a discharge outlet of the device as the ultimate discharge point or outlet of the dispense path from the beverage machine prevents contamination of the heated water by any beverage ingredient residue which may be present in the parts of the beverage machine. Cross-contamination can be a problem, in particular where the beverage machine is also used for dispensing beverages formed from an extractable or soluble beverage ingredient, such as roast and ground coffee, powdered chocolate or a liquid dairy-based ingredient. Using the device outlet as the beverage machine outlet allows that the heated water, once it enters the device, passes to an end receptacle without further contact with components of the beverage machine.

The device may be interchangeable with a cartridge piercing unit and/or a discharge spout of the beverage machine. Where the beverage machine to be used in combination with the device is normally provided with a piercing unit and/or a discharge spout for piercing cartridges containing beverage ingredients, the device may interchange with the piercing unit and/or the discharge spout. For example, beverage machines marketed under the brand name Tassimo^{®} (an example of which is described in EP1440639) comprise an inlet piercer and an outlet piercer. The outlet piercer of the Tassimo^{®} beverage machine may also define a discharge spout of the beverage machine or connect to a separate discharge spout. The inlet and outlet piercers may be formed as a single unit. The present device may be designed to be interchanged with the inlet piercer, the outlet piercer and/or the discharge spout of a Tassimo^{®} beverage machine. In this way, advantageously, the possibility of cross-contamination of the heated water is further reduced. The device may also be designed to fit beverage machines other than Tassimo^{®} beverage machines.

The device may be an insert that is partly or wholly received in use within the interior of the beverage machine. For example, the device may be inserted into the brew chamber of the beverage machine. Advantageously, the outlet of the device may extend outside the beverage machine to function as the ultimate outlet for the heated water.

The device may be an attachment that is attached to the beverage machine with the whole or a major portion of the device residing outside the beverage machine.

The present disclosure also describes a method of dispensing heated water from a beverage machine of the type comprising a code reader, comprising utilising a device comprising a plurality of codes in combination with the beverage machine to set one or more dispensation parameters of the beverage machine; the method comprising the steps of:
a) configuration of the device by a user to thereby select one of the plurality of codes to be read by the code reader of the beverage machine;
b) operating the beverage machine such that the code reader reads the selected code of the device to thereby set one or more dispensation parameters of the beverage machine;
c) dispensing heated water in accordance with the one or more dispensation parameters via the device into a receptacle.

The one or more dispensation parameters may include one or more of:
- the volume of heated water to be dispensed;
- the temperature of the heated water to be dispensed; and
- the timing of dispensation of the heated water.

### Description of the Drawings

Figure 1 is a cross-sectional view of a device according to the present disclosure;
Figure 2 is a perspective view of the device of Figure 1;
Figure 3 is a perspective exploded view of the device of Figure 1;
Figure 4 is a perspective view of the device of Figure 2 from another angle;
Figure 5 is a perspective exploded view of the device of Figure 1 from another angle;
Figure 6 is a schematic view of a combination according to the present disclosure comprising the device of Figure 1 and a beverage machine;
Figure 7 is a perspective exploded view of another device according to the present disclosure;
Figure 8 is a perspective view of the device of Figure 7;
Figure 9 is a cross-sectional view of the device of Figure 7; and
Figure 10 is a perspective view of a portion of the device of Figure 7 containing a plurality of ingredients.

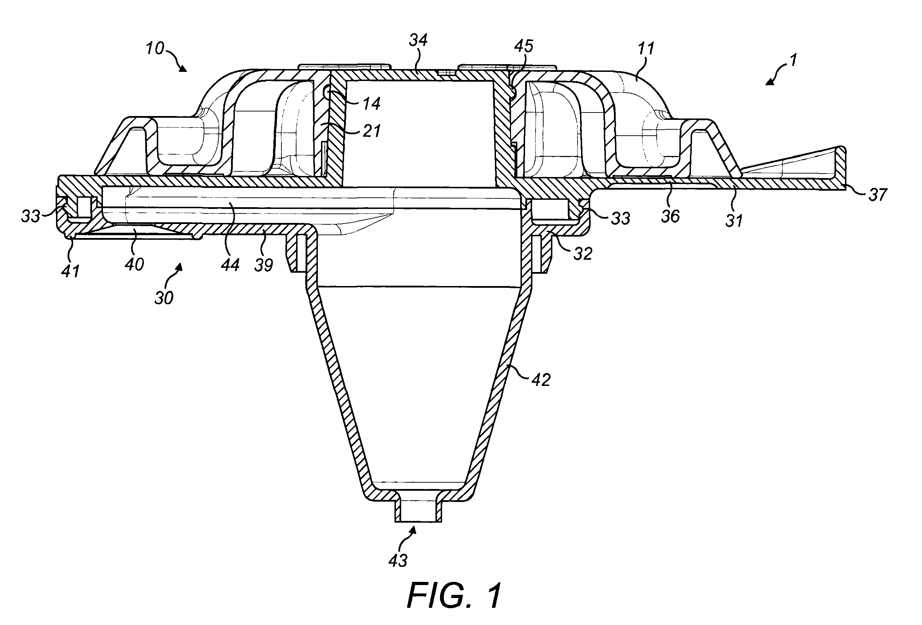

A first device 1 according to the present disclosure is shown in Figures 1 to 5 and comprises an upper part 10 and a lower part 30.

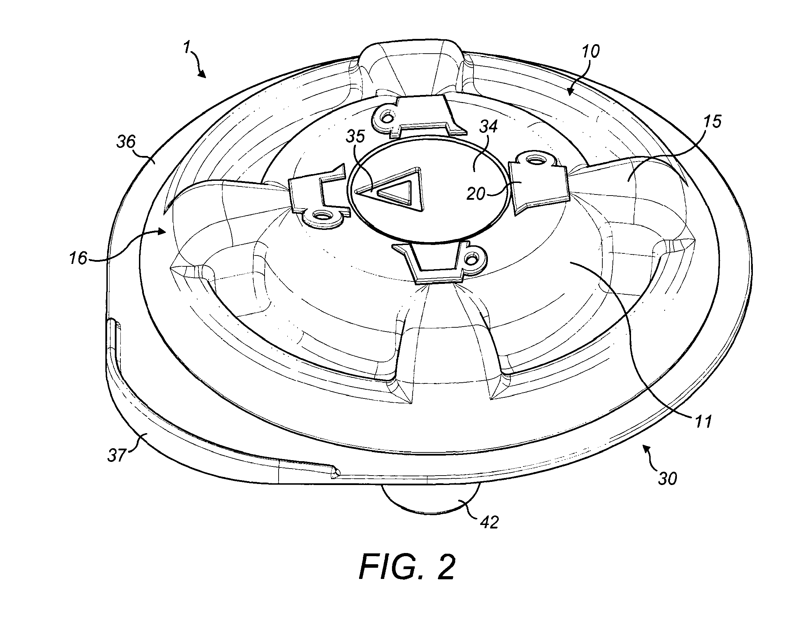

The upper part 10 comprises an annular shell 11 having a centrally located inner cylindrical extension 21 surrounding a central through aperture 12. The shell 11 is relatively thin and forms a generally cup-shaped or dome-shaped annular shape. The shell 11 is convoluted so as to comprise a plurality of depressions and raised finger grips 15 around the circumference of the shell 11 which allow a user of the device 1 to more easily grip the upper part 10. As shown most clearly in Figure 2, an upper face 16 of the upper part 10 is provided with four indicia 20 equi-spaced circumferentially around the central aperture 12. Each of the indicia 20 pictorially represents a volume setting of the device 1 - respectively, a quarter-full container; a half full container; a three-quarter full container; and a full container. The indicia 20 are evenly distributed around the circumference of the upper part so as to lie 90° offset from one another.

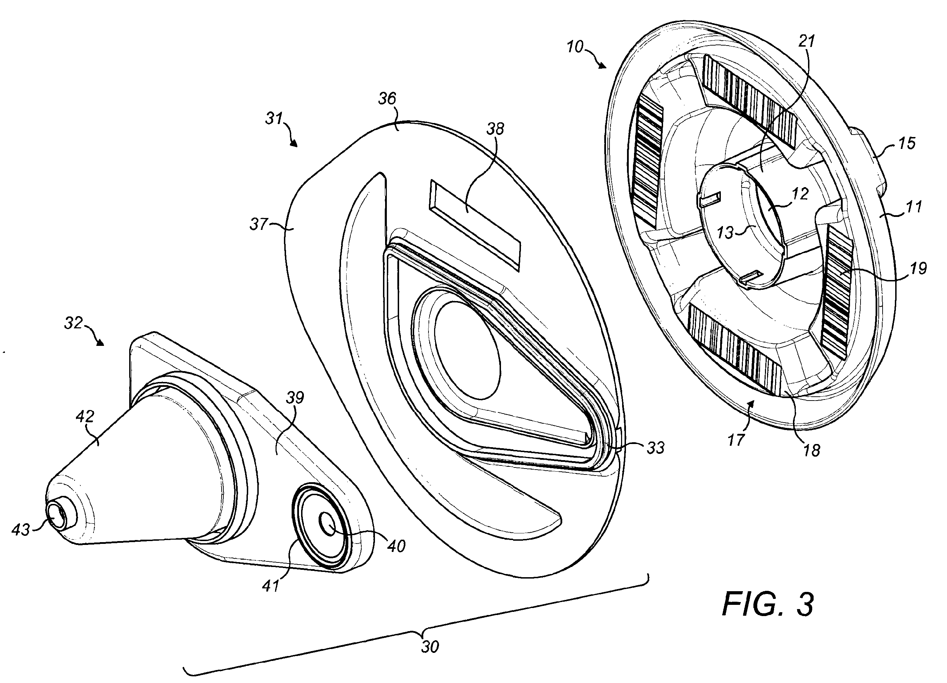

As most clearly shown in Figure 3, a lower face 17 of the upper part 10 also has a convoluted shape and in particular is provided with four lands 18 on which are deployed four barcodes 19. As with the indicia 20, the barcodes 19 are evenly distributed circumferentially around the upper part 10 so as to be 90° offset from one another.

The barcodes 19 are encoded with data representative of one or more dispensation parameters, such as volume, temperature or flow rate. For the illustrated device 1, the barcodes 19 are encoded with dispensation volumes of 150ml, 200ml, 400ml and 600ml respectively. The barcodes 19 may use a proprietary encoding symbology or a standardised symbology such as Universal Product Code (UPC) or European Article Number-13 (EAN-13).

As shown in Figures 1, 3 and 5, the inner cylindrical extension 21 is provided with a circumferential race 13 near the upper side of the upper part 10 in the form of a channel of semi-circular cross-section which extends around the entire circumference of the inner cylindrical extension 21. In addition, the race 13 is provided with four pip recesses 14 evenly distributed around the race 13 offset by 90° from one another. The use of the pip recesses 14 and race 13 will be described further below.

The upper part 10 may be formed as a moulded component or otherwise thermoformed from polypropylene. Other engineering plastics may also be used.

The lower part 30, as shown in Figure 3, comprises a base member 31 and an inlet/outlet member 32 which are assembled together by means of co-operating snap-fit formations 33.

The base member 31 comprises a generally planar plate 36 which is generally circular in shape except for a single lobe portion 37 which extends at one point around the circumference of the plate 36. A rectangular window 38 is provided in the plate 36, the function of which will be described below.

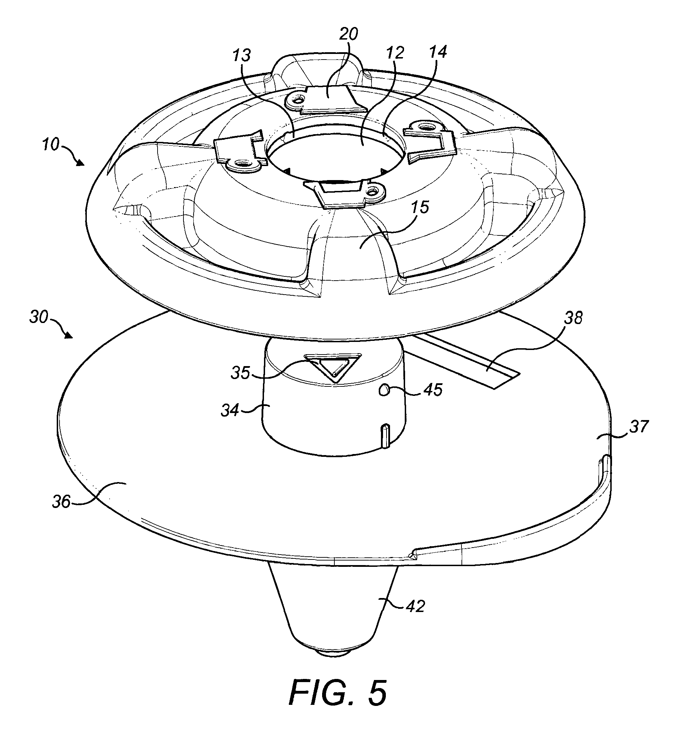

As shown in Figures 1 and 5, the base member 31 also comprises an upwardly extending central boss 34 of generally cylindrical shape. A pip 45 is provided on the central boss 34 near the upper face thereof. The upper face of the central boss 34 is provided with an arrow indicia 35, the use of which will be described below.

The inlet/outlet member 32 comprises a body portion 39 having an inlet aperture 40 and a discharge spout 42 extending therefrom. The discharge spout 42 may be formed unitarily with the body portion 39 or may be a separate component that is assembled with the body portion 39 by means of snap-fit formations.

The inlet aperture 40 is formed as a hole in the body portion 39 and is provided with an annular peripheral ring formation 41 which stands proud of the remainder of the surface of the body portion 39 as shown most clearly in Figure 1.

The discharge spout 42 is generally frustoconical in shape and terminates at its lower end in an outlet aperture 43.

One or more seal members such as rubberised or polymer O-ring gaskets may be provided around the inlet aperture 40.

The upper part 10 and lower part 30 may be formed from moulded pieces of polypropylene. Other engineering plastics may also be used.

The device 1 is assembled by snap-fitting the inlet/outlet member 32 to the base member 31 to form the lower part 30. As best seen in Figure 1, the inlet/outlet member 32 and base member 31 define therebetween a flow passage 44 in the form of a conduit which extends through the interior of the device 1 from the inlet aperture 40 to the outlet aperture 43.

The upper part 10 is then assembled with the lower part 30 by inserting the inner cylindrical extension 21 over the central boss 34. As shown in Figure 1, the relative dimensions of the central boss 34 and the inner cylindrical extension 21 result in a close fit of the lower parts 30 and the upper part 10 whilst allowing relative rotational movement between the two components. Further, as shown in Figure 1, the pip 45 of the central boss 34 is received in race 13 of the upper part 10. The dimensions of the pip 45 are such as to form a matching fit with the pip recesses 14 of the race 13. The upper part 10 is retained on the lower part 30 by the interaction of the pip 45 and the race 13. Alternatively, other mutually engaging formations on the upper part 10 and the lower part 30 may be used to secure the two components together.

In use, a user of the device 1 may rotate the upper part 10 relative to the lower part 30 by holding the base member 31 and gripping the upper part 10 by the finger grips 15. Rotational force applied to the upper part 10 will result in the upper part 10 rotating relative to the lower part 30 with the pip 45 of the central boss 34 moving within race 13 of the upper part 10. As the pip 45 is moved into alignment with each pip recess 14, the upper part 10 will 'notch' relative to the lower part 30 such as to have a tendency to wish to remain in said alignment. A slightly increased rotational force must then be applied to move the pip 45 out of the engaged pip recess 14 into which it is received and further round the race 13. By this arrangement a user is provided with tactile feedback as to when the pip 45 is correctly aligned with one of the four pip recesses 14.

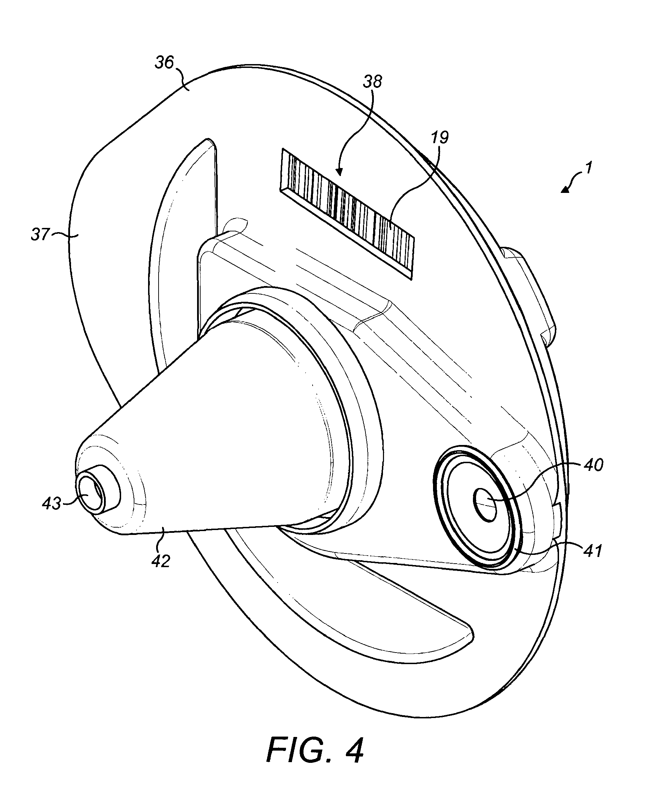

As shown in Figure 4, the relative positioning of the pip 45 on the central boss 34 and the pip recesses 14 in the race 13 is such that when the pip 45 is received in one of the pip recesses 14, one of the four barcodes 19 of the upper part 10 is aligned with the window 38 of the base member 31 so as to be visible therethrough.

The device 1 is designed to be used in combination with a beverage machine for dispensing heated water. The design of the device 1 illustrated in Figures 1 to 5 is designed to be combined with one of a range of beverage machines of the system marketed under the brand name Tassimo^{®} and described by way of example in EP1440639, the contents of which are incorporated herein in their entirety. Such a beverage machine comprises a water reservoir that is fluidly connected to a water inlet of a brew head which comprises a fixed lower part and a pivotable upper part that can be opened to allow insertion of a beverage cartridge. The brew head comprises an outlet in the lower part through which beverages are dispensed. The brew head is shaped to receive the beverage cartridge in a specific orientation.

The water is heated either by providing an immersion heater in the reservoir or pumping the water via a resistive flow heater or thermoblock. One or more temperature sensors are provided for controlling the temperature of the water dispensed. Volume control is provided by use of a flow meter or by controlling the number of pump cycles of a positive displacement pump. The beverage machine comprises a microprocessor control linked to the heater, pump, flow meter, temperature sensor(s) and also to a barcode reader of the brew head. The brew head is provided with an inlet piercer coupled to the water inlet and an outlet piercer coupled to the outlet of the brew head. In use the piercers form an inlet and an outlet in previously sealed beverage cartridges inserted into the brew head. Preferably, the inlet and outlet piercers are formed as a single replaceable piercer unit.

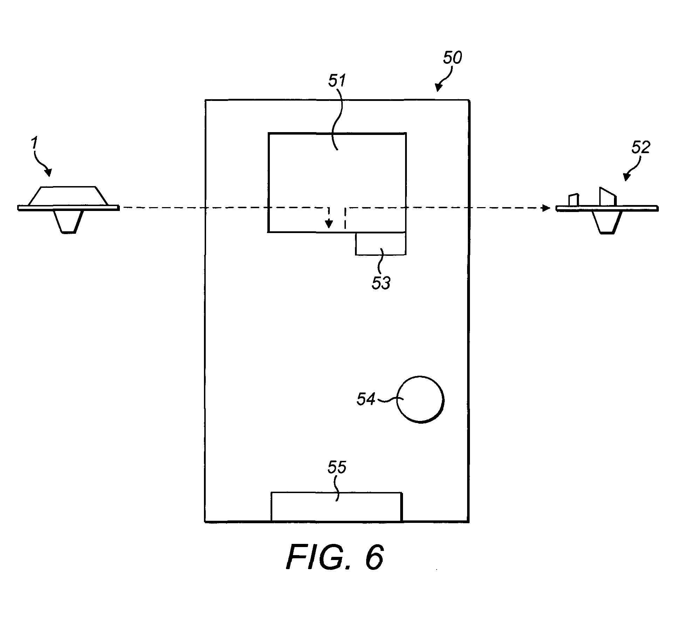

In order to use the device 1 in said beverage machine 50, as shown in Figure 6, the user first removes the replaceable inlet/outlet piercer unit 52 of the beverage machine 50 to expose the water inlet of the lower part of the brew head 51 and the brew head outlet. The user then configures the device 1 in order to set the desired volume of heated water to be dispensed by rotating the upper part 10 relative to the lower part 30 as described above. By so doing, the barcode 19 corresponding to the desired dispensation volume of heated water is brought into alignment with the window 38. At the same time, as shown most clearly in Figure 2, the arrow indicia 35 on the central boss 34 is brought into alignment with the indicia 20 on the upper part 10 corresponding with the chosen volume of heated water providing a visual check to the user of the volume set.

The device 1 is then inserted into the brew head 51 of the beverage machine as shown in Figure 6 such that the inlet aperture 40 of the inlet/outlet member 32 is aligned with the water inlet of the brew head and the discharge spout 42 extends downwardly through the outlet aperture of the brew head. In addition, the window 38 of the lower part 30 is aligned with the barcode scanner 53 of the brew head. Correct alignment of the device 1 is ensured by orientating the lobe 37 of the lower part 30 in the corresponding recess in the brew head.

The upper part of the brew head 51 of the beverage machine 50 is then closed in order to grip the device 1 in position. The compressive force applied to the device 1 ensures a fluid tight seal between the inlet/outlet member 32 and the fixed lower part of the brew chamber - this seal being improved by the presence of the annular peripheral ring 41 and, optionally, one or more compressible or resilient seals, such as O-rings. Consequently, the water inlet of the brew head is fluidly coupled to the inlet aperture 40 of the device 1.

The beverage machine 50 is then operated in the standard manner by pressing a start switch 54. This causes the barcode reader 53 of the beverage machine to be actuated to scan the barcode 19 through the window 38 of the lower part 30. The barcode 19 is configured to provide valid instructions to the microprocessor of the beverage machine to set the necessary dispensation parameters. In the case as illustrated where the device 1 is used for choosing a volume of heated water to be dispensed the primary parameter set by the barcode 19 is the volume of water dispensed. However, the barcode 19 may also set one or more further parameters of the dispensation cycle such as the flow rate and temperature of the water to be dispensed.

Following operation of the barcode reader of the beverage machine the beverage machine 50 operates in accordance with its programming to heat the water from its reservoir to the desired temperature by means of its heater and then to pump the heated water through the device 1 by pumping the water from the water inlet of the brew head into the lower part 30 through the inlet aperture 40, then via the flow passage 44 within the lower part 30 and finally down through the discharge spout 42 and out of the outlet aperture 43 into a receptacle positioned on a cup stand 55 of the beverage machine. The volume of water dispensed is determined by means of the flow meter and/or positive displacement pump of the beverage machine and dispensation ceases once the processor has determined that the volume of water dispensed meets the desired volume as set by the barcode 19.

Following the dispensation cycle of dispensing heated water, the device 1 may be left in the beverage machine in order to dispense a further quantity of heated water or may be removed so as to replace the inlet/outlet piercer unit of the beverage machine in order to dispense beverages using one or more pre-packaged beverage ingredients.

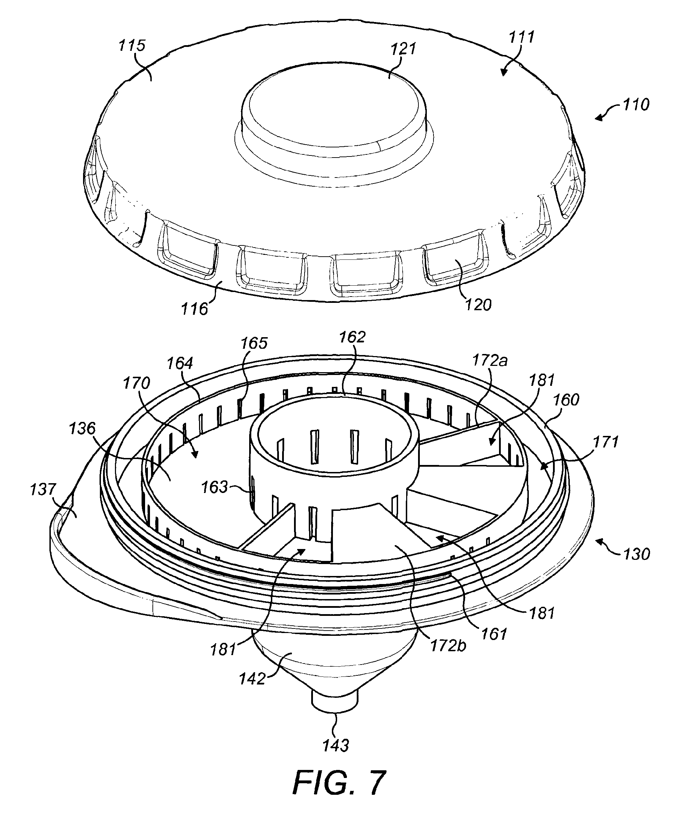

A second device 101 according to the present disclosure is shown in Figures 7 to 10 and comprises an upper part 110 and a lower part 130.

The upper part 110 forms a lid or cap of the device 101 and comprises an annular shell 111 having a centrally located raised cylindrical extension 121 which may be utilised as a handle for holding the upper part 110. The shell 111 is relatively thin and forms a generally disc-shaped configuration having a relatively flat body 115 and a dependant circumferential wall 116. An inner face of the wall 116 is provided with a screw thread formation (not shown in Figure 7) by which the upper part 110 can be screwed onto the lower part 130. An outer face of the wall 116 is provided with a series of indentations 120 which improve manual gripping and twisting of the upper part 110 when screwing and unscrewing the upper part 110.

The upper part 110 may be formed as a moulded component or otherwise thermoformed from polypropylene. Other engineering plastics may also be used.

The lower part 130 comprises a body 131 having an inlet aperture 140 and a discharge spout 142. The discharge spout 142 is generally frustoconical in shape and terminates at its lower end in an outlet aperture 143.

The body 131 comprises a generally planar plate 136 which is generally circular in shape except for a single lobe portion 137 which extends at one point around the circumference of the plate 136.

The body 131 also comprises a number of raised formations which extend upwardly from an upper face of the plate 136.

An outer wall 160 extends circumferentially around the body 131 and is located near a periphery of the plate 136. An outer face of the outer wall 160 is provided with a screw thread formation 161 that partners the screw thread formation of the wall 116 of the upper part 110 and facilitates attachment and detachment of the upper part 110 with the lower part 130. The outer wall 160 is solid without any through apertures therein.

An inner wall 162 extends circumferentially around the body 131 and located near a centre of the plate 136. The inner wall 162 is higher than the outer wall 160. The inner wall 162 is provided with a plurality of slots 163 that extend through the inner wall 162 to provide fluid communication across the inner wall 162 into the discharge spout 142.

An intermediate wall 164 extends circumferentially around the body 131 and is located between the outer wall 160 and the inner wall 162. The intermediate wall 164 is the same height as the outer wall 160. The intermediate wall 164 is provided with a plurality of slots 165 that extend through the intermediate wall 164 to provide fluid communication across the intermediate wall 164. The intermediate wall 164 demarcates a beverage ingredient zone 170 which lies inside the intermediate wall 164 from a manifold zone 171 which lies outside the intermediate wall 164.

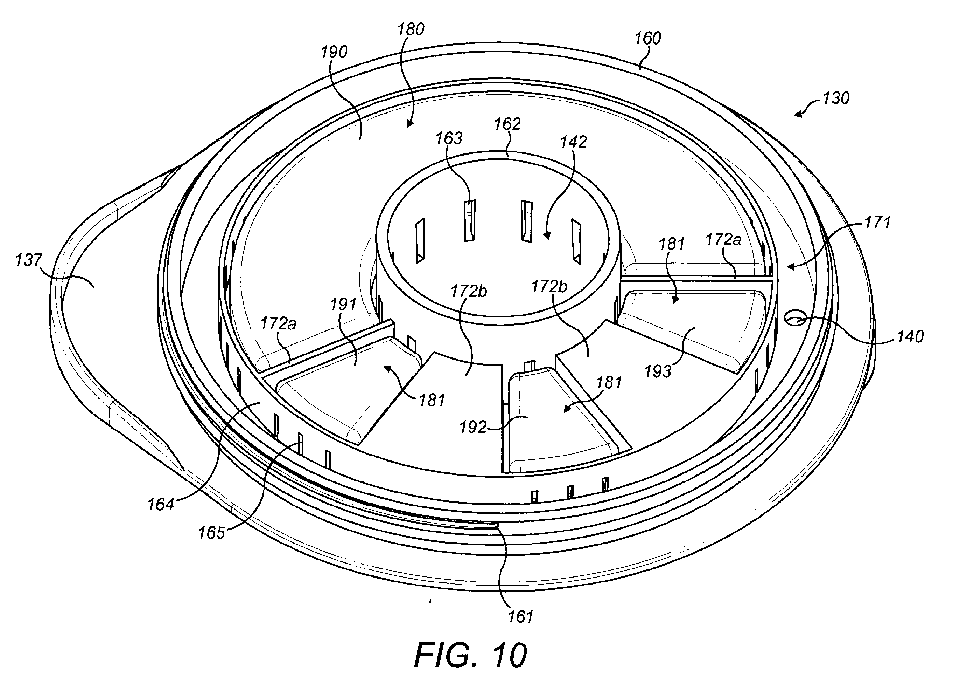

As most clearly shown in Figure 10, the inlet aperture 140 opens into the manifold zone 171 of the lower part 130.

The beverage ingredient zone 170 is separated into a plurality of chambers by radially extending walls. The walls may be thin walls 172a or in the form of thickened walls (or solid segments) 172b. Thus, in the illustrated example, there are formed a single main beverage ingredient chamber 180 and three ancillary beverage ingredient chambers 181.

The slots 165 of the intermediate wall 164 provide fluid communication from the manifold zone 171 into each of the chambers 180 and 181.

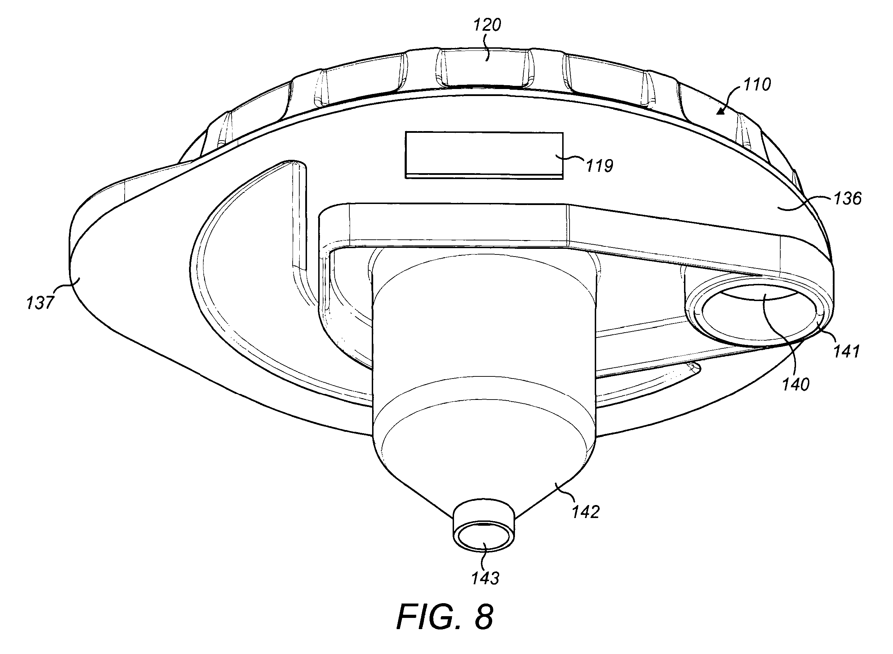

As most clearly shown in Figure 8, the inlet aperture 140 is formed as a hole in the plate 136 and opens into the manifold zone 170. The inlet aperture 140 is provided with an annular peripheral ring formation 141 which stands proud of the remainder of the surface of the plate 136.

One or more seal members such as rubberised or polymer O-ring gaskets may be provided around the inlet aperture 140.

The discharge spout 142 extends downwards away from the plate 136.

A barcode 119 is located on the underside of the plate 136, the use of which will be described below. The barcode 119 is encoded with data representative of one or more dispensation parameters, such as volume, temperature or flow rate. The barcode 119 may use a proprietary encoding symbology or a standardised symbology such as Universal Product Code (UPC) or European Article Number-13 (EAN-13).

The lower part 130 may be formed from moulded pieces of polypropylene. Other engineering plastics may also be used. The lower part may be formed as a single moulding or from multiple components which are assembled together.

The device 101 is assembled by screwing the upper part 110 or lid onto the lower part 130 by means of the screw thread formations on each part.

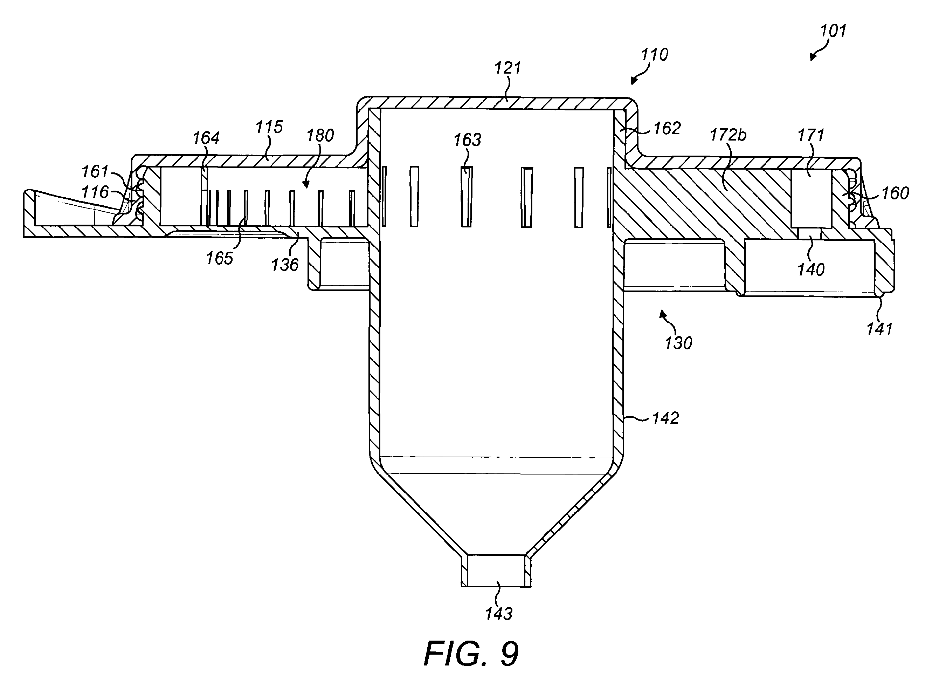

As best seen in Figure 9, the when the upper part 110 and the lower part 130 are fully screwed together the body 115 of the upper part 110 forms a fluid-tight sealing interface with the tops of the outer wall 160 and intermediate wall 164 as well as the walls 172a and 172b. Similarly the inner face of the cylindrical extension 121 forms a fluid-tight sealing interface with the top of the inner wall 162.

To use the device 101, a user first separates the upper part 110 from the lower part 130 by unscrewing the upper part or lid. Then one or more beverage ingredients are inserted into one or more of the beverage ingredient chambers 180 and 181 as most clearly shown in Figure 10. The main beverage ingredient chamber 180 is larger than the ancillary beverage ingredient chambers 181 and is intended to receive the beverage ingredient 190 that will be the main constituent of the beverage. The chamber 180 may receive two or more ingredients as a mixture or composition.

Examples of beverage ingredients which may be inserted into the main beverage ingredient chamber 180 include coffee, chocolate, milk, tea and fruit-flavoured drink mixes.

The ancillary beverage ingredient chambers 181 are smaller and intended for receiving secondary ingredients 191, 192, 193, such as flavourings, colourings, sweeteners, foaming agents, etc. For a particular beverage none, one or more of the ancillary beverage ingredient chambers 181 may receive ingredients. Each ancillary chamber 181 may receive two or more ingredients as a mixture or composition.

Examples of beverage ingredients which may be inserted into the ancillary beverage ingredient chambers 181 include coffee extracts, tea extracts, cocoa extracts, dairy-based ingredients including creamers, foaming agents, flavourings including orange, ginger, amaretto, mint, chocolate truffle, etc., and colourings.

The beverage ingredients in the chambers 180 and 181 may be in a dry form such as a roasted and ground ingredient or a soluble powder or an agglomeration. For example, the coffee ingredient may be roast and ground coffee or a freeze-dried or spray-dried soluble coffee. The dry ingredients may be loosely packed into the chambers 180 and 181 or may be in the form of compressed tablets.

The beverage ingredients in the chambers 180 and 181 may be in a liquid form such as a liquid dairy-based ingredient or a liquid tea or coffee extract.

The beverage ingredients, in particular when in liquid form, may be contained in a capsule or container shaped and sized to be received in the chambers 180 and 181 to retain the ingredient within its respective chamber until dispensation. The capsules may be formed from a watersoluble or heat-sensitive material which is designed to dissolve on contact with water and/or heated fluid to thereby release the ingredients. An example are polysaccharide films which are soluble in water.

The user then screws the upper part 110 and lower part 130 together to seal the beverage ingredients within the device 101.

The device 101 is designed to be used in combination with a beverage machine for dispensing heated water of the type as described above (including the content of EP1440639) with reference to the device 1 of Figures 1 to 5. The description of the beverage machine will not be repeated here. Instead the reader is directed to the description above.

In order to dispense a beverage from the device 101 in said beverage machine 50, as shown in Figure 6, the user first removes the replaceable inlet/outlet piercer unit 52 of the beverage machine 50 to expose the water inlet of the lower part of the brew head 51 and the brew head outlet. The user then inserts the device 101 into the brew head 51 of the beverage machine as shown in Figure 6 such that the inlet aperture 140 is aligned with the water inlet of the brew head and the discharge spout 142 extends downwardly through the outlet aperture of the brew head. In addition, the barcode 119 is aligned with the barcode scanner 53 of the brew head. Correct alignment of the device 1 is ensured by orientating the lobe 137 of the lower part 130 in the corresponding recess in the brew head.

The upper part of the brew head 51 of the beverage machine 50 is then closed in order to grip the device 101 in position. The compressive force applied to body 115 and/or raised extension 121 of the device 101 ensures a fluid tight seal between the lower part 130 and the fixed lower part of the brew chamber - this seal being improved by the presence of the annular peripheral ring 141 and, optionally, one or more compressible or resilient seals, such as O-rings. Consequently, the water inlet of the brew head is fluidly coupled to the inlet aperture 140 of the device 101.

The beverage machine 50 is then operated in the standard manner by pressing a start switch 54. This causes the barcode reader 53 of the beverage machine to be actuated to scan the barcode 119. The barcode 119 is configured to provide valid instructions to the microprocessor of the beverage machine to set the necessary dispensation parameters. These parameters can include the volume of water dispensed, the flow rate and the temperature of the water to be dispensed.

Following operation of the barcode reader of the beverage machine the beverage machine 50 operates in accordance with its programming to heat the water from its reservoir to the desired temperature (if heated water is desired) by means of its heater and then to pump the water through the device 101 by pumping the water from the water inlet of the brew head into the manifold zone 171 through the inlet aperture 140. The water is enabled to circulate in the manifold zone 171 and from there enter the beverage ingredient chambers 180 and 181 through the slots 165 in the intermediate wall 164. Once in the chambers 180 and 181 the water interacts with the beverage ingredients (after dissolving any ingredient wrapper, capsule, film, etc. where present) so that the beverage ingredients are brewed or dissolved to form a beverage fluid. The resultant beverage fluid exits into the top of the discharge spout 142 through the slots 163 in the inner wall 162. Once in the discharge spout the beverage fluid mixes and is dispensed out of the outlet aperture 143 into a receptacle positioned on a cup stand 55 of the beverage machine.

Following the dispensation cycle the device 101 may be removed and reused by refilling one or more of the beverage ingredient chambers 180 and 181 as desired.

Whilst the examples above has been described with reference to devices 1 and 101 with a discharge spout this is not essential. Instead, the devices may output water or other beverage into a discharge spout or channel of a beverage machine.

Whilst the examples above has been described with reference to a Tassimo^{®} beverage machine, the devices 1 and 101 of the present disclosure may be configured to work with other beverage machines.

## Claims

1. A device, suitable for use with a beverage machine of the type comprising a code reader, the device comprising:
an inlet for receiving, in use, heated water from a water supply of the beverage machine; and
an outlet through which said heated water can be dispensed;
the device further comprising a plurality of codes, each of the plurality of codes containing information relating to one or more dispensation parameters of the beverage machine;
the device being configurable by a user such that the user can choose one of the plurality of codes to be read by the code reader of the beverage machine during a dispensation operation in order to set one or more dispensation parameters of the beverage machine.

2. A device as claimed in claim 1 wherein the device is empty of beverage ingredients prior to use.

3. A device as claimed in claim 1 or claim 2 wherein the plurality of codes are spatially distributed on the device.

4. A device as claimed in any preceding claim wherein a part of, or the whole of, the device can be disposed in a plurality of dispositions relative to the beverage machine in order to choose the one of the plurality of codes to be read by the code reader.

5. A device as claimed in any preceding claim wherein the device comprises a first part and a second part;
the second part comprising the plurality of codes and being movable relative to the first part to allow the user to configure the device.

6. A device as claimed in claim 5 wherein the second part is rotatable relative to the first part and the plurality of codes are circumferentially distributed on the second part.

7. A device as claimed in claim 5 or claim 6 wherein the first part comprises a window through which the code reader of the beverage machine is enabled to read one of the plurality of codes during the dispensation operation.

8. A device as claimed in any of claims 5 to 7 wherein the first part comprises the inlet and the outlet.

9. A device as claimed in any of claims 5 to 8 wherein the first part further comprises a passage for conveying heated water from the inlet to the outlet.

10. A device as claimed in any preceding claim wherein the one or more dispensation parameters includes one or more of:
- the volume of heated water to be dispensed;
- the temperature of the heated water to be dispensed; and
- the timing of dispensation of the heated water.

11. A device as claimed in any preceding claim wherein the plurality of codes are a plurality of barcodes.

12. The combination of a device as claimed in any preceding claim and a beverage machine which comprises a code reader.

13. The combination of claim 12 wherein the outlet of the device defines a discharge outlet of the beverage machine.

14. The combination of claim 12 or claim 13 wherein the device is interchangeable with a cartridge piercing unit and/or a discharge spout of the beverage machine.

15. A method of dispensing heated water from a beverage machine of the type comprising a code reader, comprising utilising a device comprising a plurality of codes in combination with the beverage machine to set one or more dispensation parameters of the beverage machine; the method comprising the steps of:
a) configuration of the device by a user to thereby select one of the plurality of codes to be read by the code reader of the beverage machine;
b) operating the beverage machine such that the code reader reads the selected code of the device to thereby set one or more dispensation parameters of the beverage machine;
c) dispensing heated water in accordance with the one or more dispensation parameters via the device into a receptacle.

16. A method as claimed in claim 15 wherein the one or more dispensation parameters includes one or more of:
- the volume of heated water to be dispensed;
- the temperature of the heated water to be dispensed; and
- the timing of dispensation of the heated water.

## Patentansprüche

1. Vorrichtung, welche zur Verwendung bei einem derartigen Getränkeautomaten geeignet ist, welcher ein Code-Lesegerät aufweist, wobei die Vorrichtung Folgendes umfasst:
eine Einlassöffnung für den Erhalt, bei Gebrauch, von erhitztem Wasser von einer Wasserzuführleitung des Getränkeautomaten; und
eine Auslassöffnung, durch welche das erhitzte Wasser abgeführt werden kann;
wobei die Vorrichtung des Weiteren eine Vielzahl von Codes aufweist, wobei jeder Code der Vielzahl von Codes Informationen enthält, welche einen oder mehrere Ausgabeparameter des Getränkeautomats betreffen;
wobei die Vorrichtung von einem Benutzer so konfigurierbar ist, dass der Benutzer einen der Vielzahl von Codes zum Auslesen durch das Code-Lesegerät des Getränkeautomaten während eines Ausgabevorgangs auswählen kann, um einen oder mehrere Ausgabeparameter des Getränkeautomaten einzustellen.

2. Vorrichtung nach Anspruch 1, **dadurch gekennzeichnet, dass** die Vorrichtung vor der Verwendung ohne Getränkezutaten ist.

3. Vorrichtung nach Anspruch 1 oder Anspruch 2, **dadurch gekennzeichnet, dass** die Vielzahl von Codes auf der Vorrichtung räumlich verteilt ist.

4. Vorrichtung nach einem der vorhergehenden Ansprüche, **dadurch gekennzeichnet, dass** ein Teil der Vorrichtung, oder die gesamte Vorrichtung in einer Vielzahl von Anordnungen relativ zu dem Getränkeautomaten angeordnet sein kann, um den einen aus der Vielzahl von Codes auszuwählen, der von dem Code-Lesegerät ausgelesen werden soll.

5. Vorrichtung nach einem der vorhergehenden Ansprüche, **dadurch gekennzeichnet, dass** die Vorrichtung einen ersten Teil und einen zweiten Teil umfasst;
wobei der zweite Teil die Mehrheit der Codes aufweist und relativ zu dem ersten Teil beweglich ist, um dem Benutzer die Konfiguration der Vorrichtung zu ermöglichen.

6. Vorrichtung nach Anspruch 5, **dadurch gekennzeichnet, dass** der zweite Teil relativ zu dem ersten Teil drehbar ist und dass die Mehrheit der Codes am Umfang des zweiten Teils verteilt ist.

7. Vorrichtung nach Anspruch 5 oder Anspruch 6, **dadurch gekennzeichnet, dass** der erste Teil ein Fenster aufweist, durch welches es dem Code-Lesegerät des Getränkeautomaten ermöglicht wird, einen der Vielzahl von Codes während des Ausgabevorgangs auszulesen.

8. Vorrichtung nach einem der Ansprüche 5 bis 7, **dadurch gekennzeichnet, dass** der erste Teil die Einlassöffnung und die Auslassöffnung aufweist.

9. Vorrichtung nach einem der Ansprüche 5 bis 8, **dadurch gekennzeichnet, dass** er erste Teil des Weiteren einen Durchlauf oder Durchfluss zum Transport von erhitztem Wasser von der Einlassöffnung zu der Auslassöffnung aufweist.

10. Vorrichtung nach einem der vorhergehenden Ansprüche, **dadurch gekennzeichnet, dass** einer oder mehrere Ausgabeparameter einen oder mehrere der folgenden Parameter umfassen:
- das Volumen des auszugebenden erwärmten Wassers;
- die Temperatur des auszugebenden erwärmten Wassers; und
- die zeitliche Steuerung der Ausgabe des erwärmten Wassers.

11. Vorrichtung nach einem der vorhergehenden Ansprüche, **dadurch gekennzeichnet, dass** die Vielzahl von Codes eine Vielzahl von Barcodes ist.

12. Kombination aus einer Vorrichtung nach einem der vorhergehenden Ansprüche und einem Getränkeautomaten, welche ein Code-Lesegerät aufweist.

13. Kombination nach Anspruch 12, **dadurch gekennzeichnet, dass** der Auslass der Vorrichtung eine Abflussöffnung des Getränkeautomaten ist.

14. Kombination nach Anspruch 12 oder Anspruch 13, **dadurch gekennzeichnet, dass** die Vorrichtung durch eine Kartuschen-Aufstecheinheit und/oder eine Auslauftülle des Getränkeautomaten austauschbar ist.

15. Verfahren zur Ausgabe von erwärmtem Wasser aus einem Getränkeautomaten von der Art, welcher ein Code-Lesegerät aufweist, wobei das Verfahren die Verwendung einer Vorrichtung einschließt, welche eine Vielzahl von Codes in Kombination mit dem Getränkeautomaten aufweist, um einen oder mehrere Ausgabeparameter des Getränkeautomaten einzustellen, wobei das Verfahren die folgenden Schritte umfasst:
a) Konfiguration der Vorrichtung durch einen Benutzer, um dadurch einen Code aus der Vielzahl von Codes auszuwählen, welcher von dem Code-Lesegerät des Getränkeautomaten ausgelesen werden soll;
b) Betrieb des Getränkeautomaten derart, dass das Code-Lesegerät den ausgewählten Code der Vorrichtung ausliest, um dadurch einen oder mehrere Ausgabeparameter des Getränkeautomaten einzustellen;
c) Ausgabe von erwärmtem Wasser gemäß dem einen oder den mehreren Ausgabeparametern über die Vorrichtung in einen Aufnahmebehälter.

16. Verfahren nach Anspruch 15, **dadurch gekennzeichnet, dass** der eine oder die mehreren Ausgabeparameter einen oder mehrere der folgenden Parameter einschließen:
- das Volumen des auszugebenden erwärmten Wassers;
- die Temperatur des auszugebenden erwärmten Wassers; und
- die zeitliche Steuerung der Ausgabe des erwärmten Wassers.

## Revendications

1. Dispositif, approprié pour une utilisation avec une machine à boissons du type comprenant un lecteur de codes, le dispositif comprenant :
un orifice d'entrée pour recevoir, en cours d'utilisation, de l'eau chauffée à partir d'une alimentation en eau de la machine à boissons ; et
un orifice de sortie à travers lequel ladite eau chauffée peut être distribuée ;
le dispositif comprenant en outre une pluralité de codes, chacun de la pluralité de codes contenant des informations relatives à un ou plusieurs paramètre(s) de distribution de la machine à boissons ;
le dispositif pouvant être configuré par un utilisateur de sorte que l'utilisateur puisse choisir un code parmi la pluralité de codes devant être lus par le lecteur de codes de la machine à boissons durant une opération de distribution afin de régler un ou plusieurs paramètre(s) de distribution de la machine à boissons.

2. Dispositif tel que revendiqué dans la revendication 1, dans lequel le dispositif est vide d'ingrédients de boissons avant l'utilisation.

3. Dispositif tel que revendiqué dans la revendication 1 ou 2, dans lequel la pluralité de codes sont répartis spatialement sur le dispositif.

4. Dispositif tel que revendiqué dans l'une des revendications précédentes, dans lequel une partie ou la totalité du dispositif peut être disposée selon une pluralité de dispositions par rapport à la machine à boissons afin de choisir le code parmi la pluralité de codes devant être lus par le lecteur de codes.

5. Dispositif tel que revendiqué dans l'une des revendications précédentes, dans lequel le dispositif comprend une première partie et une deuxième partie ;
la deuxième partie comprenant la pluralité de codes, et étant mobile par rapport à la première partie pour permettre à l'utilisateur de configurer le dispositif.

6. Dispositif tel que revendiqué dans la revendication 5, dans lequel la deuxième partie peut tourner par rapport à la première partie et la pluralité de codes sont répartis de manière circonférentielle sur la deuxième partie.

7. Dispositif tel que revendiqué dans la revendication 5 ou 6, dans lequel la première partie comprend une fenêtre à travers laquelle le lecteur de codes de la machine à boissons est capable de lire un code parmi la pluralité de codes durant l'opération de distribution.

8. Dispositif tel que revendiqué dans l'une des revendications 5 à 7, dans lequel la première partie comprend l'orifice d'entrée et l'orifice de sortie.

9. Dispositif tel que revendiqué dans l'une des revendications 5 à 8, dans lequel la première partie comprend en outre un passage pour acheminer l'eau chauffée de l'orifice d'entrée vers l'orifice de sortie.

10. Dispositif tel que revendiqué dans l'une des revendications précédentes, dans lequel le ou les plusieurs paramètre(s) de distribution comporte/comportent un ou plusieurs paramètre(s) parmi :
- le volume d'eau chauffée devant être distribuée ;
- la température de l'eau chauffée devant être distribuée ;
et
- la synchronisation de distribution de l'eau chauffée.

11. Dispositif tel que revendiqué dans l'une des revendications précédentes, dans lequel la pluralité de codes est une pluralité de codes à barres.

12. Combinaison d'un dispositif tel que revendiqué dans l'une des revendications précédentes et d'une machine à boissons qui comprend un lecteur de codes.

13. Combinaison de la revendication 12, dans laquelle l'orifice de sortie du dispositif définit un orifice de sortie d'évacuation de la machine à boissons.

14. Combinaison de la revendication 12 ou 13, dans laquelle le dispositif est interchangeable avec une unité de perçage de cartouche et/ou un bec d'évacuation de la machine à boissons.

15. Procédé de distribution d'eau chauffée à partir d'une machine à boissons du type comprenant un lecteur de codes, comprenant l'utilisation d'un dispositif comprenant une pluralité de codes en combinaison avec la machine à boissons pour régler un ou plusieurs paramètre(s) de distribution de la machine à boissons ; le procédé comprenant les étapes qui consistent :
a) à configurer le dispositif par un utilisateur, ce qui permet de sélectionner un code parmi la pluralité de codes devant être lus par le lecteur de codes de la machine à boissons ;
b) à faire fonctionner la machine à boissons de sorte que le lecteur de codes lit le code sélectionné du dispositif ce qui permet de régler un ou plusieurs paramètre(s) de distribution de la machine à boissons ;
c) à distribuer de l'eau chauffée en fonction du ou des plusieurs paramètre(s) de distribution par l'intermédiaire du dispositif dans un réceptacle.

16. Procédé tel que revendiqué dans la revendication 15, dans lequel le ou les plusieurs paramètre(s) de distribution comporte/comportent un ou plusieurs paramètre(s) parmi :
- le volume d'eau chauffée devant être distribuée ;
- la température de l'eau chauffée devant être distribuée ;
et
- la synchronisation de distribution de l'eau chauffée.
